# EUROPÄISCHE PATENTANMELDUNG

(11) **EP 3 957 516 A2**
(43) Veröffentlichungstag der Anmeldung: **23.02.2022**
(21) Anmeldenummer: 21185459.1
(22) Anmeldetag: 14.07.2021
(51) Int. Cl.: B60M 1/12, B60M 1/30

(54) **STROMSCHIENE**

(30) Priorität: 17.08.2020 DE 102020210413
(71) Anmelder: Siemens Mobility GmbH, 81739 München (DE)
(72) Erfinder: Jung, Frederik, 91330 Eggolsheim (DE); Mielsch, Florian, 90587 Veitsbronn (DE); Rister, Stephan, 90469 Nürnberg (DE)

(57) **Zusammenfassung**

Die Erfindung betrifft eine Stromschiene (1', 1", 1"') mit einem Querträger (6'), von dem zwei Spannarme (4') ausgehen, an die Klemmarme (3', 3") angeformt sind.

Die Stromschiene (1', 1", 1"') weist weiterhin eine Klemmverbindung (11, 11', 11", 11''', 12) auf, wobei mittels der Klemmverbindung (11, 11', 11", 11"', 12) und den Klemmarmen (3', 3") zwei Fahrdrähte (2') aufnehmbar sind, wobei sich die zwei Fahrdrähte (2') nicht gegenseitig berühren.

## Beschreibung

Die Erfindung betrifft eine Stromschiene.

Im elektrischen Schienenverkehr werden bei Gleichstrombahnen bisher üblicherweise Kettenwerkssysteme mit zwei Fahrdrähten eingesetzt, um die nötige Stromtragfähigkeit zu erreichen. Systeme mit Stromschienen, insbesondere Deckenstromschienen, können eine genügend hohe Stromübertragung auf die Schleifleiste von Schienenfahrzeugen nicht immer zufriedenstellend leisten, da bei derzeit bekannten und verwendeten Stromschienen, insbesondere Deckenstromschienen, lediglich ein Fahrdraht eingeklemmt werden kann. Im Vergleich zu der bisherigen Lösung mit Kettenwerkssystemen kommt es daher zu einer Halbierung der Kontaktstellen zwischen Oberleitung und beispielsweise einem Pantographen eines Schienenfahrzeugs.

Aus der EP 2 255 991 B1 ist hierzu eine Stromschiene mit einem Querträger bekannt, von dem zwei Spannarme ausgehen, an die Klemmarme zur Aufnahme eines Fahrdrahtes angeformt sind, wobei mit jedem Spannarm jeweils eine Stoßlasche verbindbar ist zum Anfügen von anschließenden Stromschienen zu einem Stromschienenstrang, da sehr lange, einzelne Stromschienen nicht handhabbar sind.

Der Erfindung liegt die Aufgabe zugrunde, eine Stromschiene anzugeben, die zur Aufnahme von zwei Fahrdrähten ausgebildet ist und eine genügend hohe Stromtragfähigkeit sicherstellen kann.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dabei weist die Stromschiene eine Klemmverbindung auf, wobei mittels der Klemmverbindung und Klemmarmen zwei Fahrdrähte aufnehmbar sind, wobei sich die zwei Fahrdrähte nicht gegenseitig berühren.

Die erfindungsgemäße Lösung hat den Vorteil, dass zwei stromführende Fahrdrähte von der Stromschiene aufgenommen werden können, die parallel und insbesondere mit sehr engem Abstand zueinander verlaufen können, ohne sich gegenseitig zu kontaktieren und eine genügend große Anzahl von Kontaktstellen zwischen Oberleitung und beispielsweise einem Pantograph eines Schienenfahrzeugs zur Verfügung stellt, um die benötigte, hohe Stromtragfähigkeit zu gewährleisten. Dabei bleiben die Vorteile der Stromschiene, insbesondere Deckenstromschiene, gegenüber der bisher üblicherweise verwendeten Lösung mit Kettenwerkssysteme, wie z. B. Bauhöhe, lange Nutzbarkeit der Fahrdrähte etc., uneingeschränkt erhalten.

Nach einer besonderen Weiterbildung der Stromschiene nach der Erfindung weist die Klemmverbindung zwei Aussparungen auf, mit denen jeweils ein Fahrdraht aufnehmbar ist. Dabei ist jeder Klemmarm direkt mit der Klemmverbindung verbunden. Auf diese Weise kann die Grundform der Stromschiene konstruktiv im Wesentlichen gleich bleiben und es müssen, neben der separaten Fertigung der Klemmverbindung, die im Einsatzfall dann die beiden Fahrdrähte aufnimmt, lediglich die beiden Klemmarme der Stromschiene entsprechend angepasst, insbesondere am Klemmarmende zurückgesetzt werden, damit die beiden Klemmarme über den jeweils unmittelbaren Kontakt zur Klemmverbindung die beiden Fahrdrähte entsprechend einklemmen können.

Nach einer weiteren, besonders bevorzugten und alternativen Ausführungsform der Erfindung ist die Klemmverbindung Teil eines Stegs und mittels des Stegs mit dem Querträger verbunden, sodass die Klemmverbindung kein separates Teil ist, sondern als Teil des Stegs mit der Stromschiene, insbesondere direkt mit dem Querträger verbunden ist und somit eine höhere Stabilität aufweist, weil die Stromschiene entsprechend einstückig und somit zusätzlich auch einfacher und kostengünstiger hergestellt werden kann.

Nach einer weiteren alternativen, besonders bevorzugten Ausführungsform der Erfindung ist die Klemmverbindung Teil eines Stegs, wobei der Steg mittels jeweils einer Verbindung mit jeweils einem der Spannarme verbunden ist und wobei wenigstens Teile der Verbindungen, wenigstens Teile der Spannarme und wenigstens Teile des Querträgers eine Aussparung umschließen. Diese alternative Ausführungsform zeichnet sich durch eine geringere Entfernung von der Klemmverbindung zu den Verbindungen im Gegensatz zur Entfernung zum Querträger aus, ist mittels der zwei Verbindungen jeweils direkt mit einem Spannarm der Stromschiene, insbesondere Deckenstromschiene, verbunden und umschließt, bzw. bildet mit zumindest Teilen der Verbindungen, sowie zumindest Teilen der Spannarme zusammen mit zumindest Teilen des Querträgers eine Aussparung, wodurch die Stromschiene noch stabiler und robuster gegen Beschädigung und somit auch noch weniger wartungsintensiv ist. Die Aussparung kann dabei ohne Beschränkung jegliche denkbare geometrische Form aufweisen. Besonders vorteilhaft sind dabei Vieleck-Formen, wie z.B. Acht-Eck-Formen.

Besonders vorteilhaft ist bei beiden beschriebenen, alternativen Ausführungsformen der erfindungsgemäßen Stromschiene mit einem Steg die Klemmverbindung mit den zwei Fahrdrähten jeweils auf den, von den Fahrdrähten zueinander gewandten Seiten und die jeweils gegenüberliegenden Seiten der zwei Fahrdrähte mit jeweils einem Klemmarm verbunden, sodass mit der Klemmverbindung zwischen den beiden Fahrdrähten und den jeweils gegenüberliegenden beiden Klemmarmen die Fahrdrähte aufgenommen und eingeklemmt werden können. Die Form und Ausdehnung der Klemmverbindung bestimmt im Wesentlichen den Abstand zwischen den beiden Fahrdrähten, ist darüber hinaus aber nicht beschränkt.

Weiterhin besonders vorteilhaft ist bei beiden Ausführungsformen der erfindungsgemäßen Stromschiene mit einem Steg die Klemmverbindung zweiarmig ausgebildet, wobei die zwei Arme auf der, bezüglich des Querträgers abgewandten Seite einen stumpfen Winkel einschließen, oder einen gestreckten Winkel bilden. Somit ist die Form der Klemmverbindung je nach Einsatzzweck entsprechend flexibel anpassbar. Geht der stumpfe Winkel in einen gestreckten Winkel, also 180°, über, verschwinden die beiden Arme naturgemäß und bilden wiederum eine Klemmverbindung ohne Arme.

Besonders vorteilhaft weisen der Steg und/oder die Verbindungen im Wesentlichen dieselbe Materialstärke wie einer der Spannarme auf, da dies entsprechende Vorteile hinsichtlich der Herstellung und der Stabilität der Stromschiene, insbesondere Deckenstromschiene hat.

Nach einer weiteren bevorzugten Ausführungsform der Erfindung befinden sich die zwei Fahrdrähte bezüglich der Oberkante des Querträgers auf der gleichen Höhe. Grundsätzlich ist eine unterschiedliche Höhe ggf. denkbar und möglich, jedoch ist außerhalb spezieller Einsatzzwecke die Ausführungsform mit gleicher Höhe der beiden Fahrdrähte aus Gründen der Gleichgewichtslage sowie der Stabilität vorteilhafter und deshalb vorzuziehen.

Im Weiteren werden bevorzugte Ausführungsbeispiele der Erfindung mit Bezugnahme auf die Zeichnungen näher erläutert. Es zeigen:
- Fig. 1 eine: Ausführung einer Stromschiene gemäß Stand der Technik und
- Fig. 2 bis 7: Ausführungsbeispiele für eine Stromschiene nach der Erfindung.

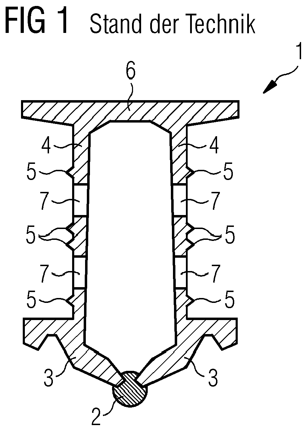

Fig. 1 zeigt eine Ausführung einer Stromschiene 1 gemäß Stand der Technik. Die Stromschiene 1 weist einen Querträger 6 auf, von dem zwei Spannarme 4 ausgehen, an die Klemmarme 3 zur Aufnahme eines einzigen Fahrdrahtes 2 angeformt sind. Die beiden Spannarme 4 weisen jeweils auf ihrer nach außen gerichteten, dem anderen Spannarm 4 nicht zugewandten Seite mindestens eine Anformung 5 auf. Diese Anformungen 5 erstrecken sich parallel zur Richtung des Fahrdrahtes 2. Die Anformungen 5 dienen dazu, jeweils eine von außen aufgesetzte Stoßlasche (hier nicht dargestellt) mit jeweils einem der Spannarme 4 zu verbinden, um mittels der Stoßlaschen eine, ebenfalls nicht gezeigte, anschließende Stromschiene an die gezeigte Stromschiene 1 anzufügen. Zur Befestigung der Stoßlaschen an der Stromschiene 1 weisen die Spannarme 4 entsprechend jeweils mindestens eine Bohrung 7 zur Aufnahme von Befestigungsmitteln, beispielsweise von Schrauben, auf.

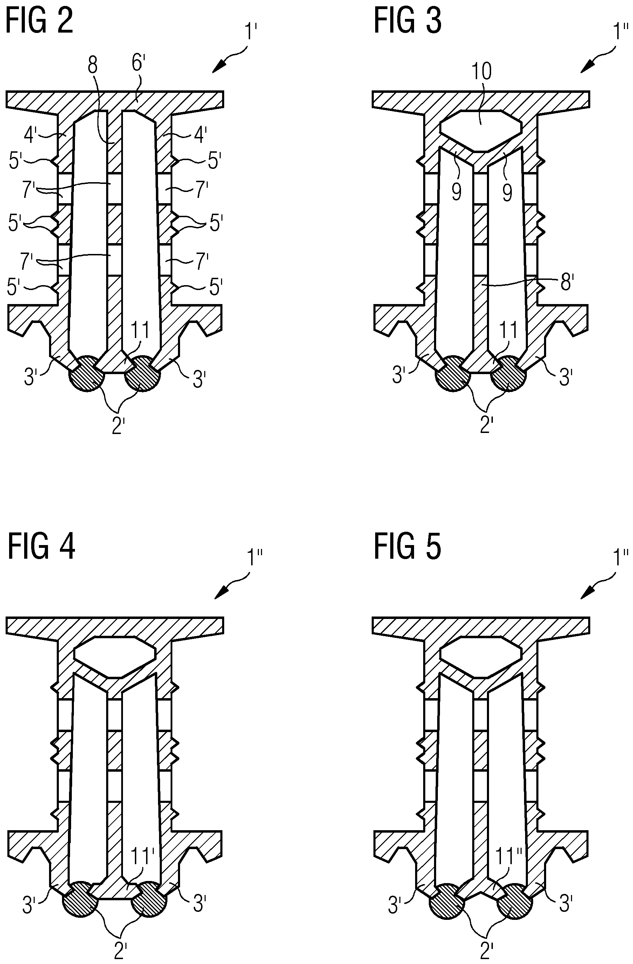

Fig. 2 zeigt ein erstes Ausführungsbeispiel für eine erfindungsgemäße Stromschiene 1', insbesondere Deckenstromschiene, mit einem Steg 8. Die hier dargestellte Stromschiene 1' weist analog zu der Stromschiene 1 aus dem Stand der Technik (SdT) ebenfalls einen Querträger 6' auf, von dem zwei Spannarme 4' ausgehen, an die Klemmarme 3' angeformt sind. Die beiden Spannarme 4' weisen ebenfalls analog zur Stromschiene 1 gemäß SdT jeweils auf ihrer nach außen gerichteten, dem anderen Spannarm 4' nicht zugewandten Seite mindestens eine Anformung 5' auf, die für dieselbe technische Aufgabe vorgesehen ist, wie die in der Fig. 1, für die Ausführung der Stromschiene 1 aus dem SdT, beschriebene. Ebenfalls analog zum SdT weisen die Spannarme 4' entsprechend jeweils mindestens eine Bohrung 7' zur Aufnahme von Befestigungsmitteln, beispielsweise von Schrauben, auf. Darüber hinaus weist die Stromschiene 1', insbesondere Deckenstromschiene, erfindungsgemäß einen Steg 8 auf, der auf der einen Seite direkt mit dem Querträger 6' verbunden ist, und auf der anderen Seite in einer Klemmverbindung 11 endet, mit der die Aufnahme von zwei Fahrdrähten 2' möglich ist. Dabei ist die Klemmverbindung 11 mit den zwei Fahrdrähten 2' jeweils auf den, von den Fahrdrähten 2' zueinander gewandten Seiten verbunden und klemmt somit die beiden Fahrdrähte 2', die auf der jeweils gegenüberliegenden Seite mit jeweils einem Klemmarm 3' verbunden sind, entsprechend ein. Mit der Klemmverbindung 11 zwischen den beiden Fahrdrähten 2' und den jeweils gegenüberliegenden beiden Klemmarmen 3' werden somit die zwei Fahrdrähte 2' aufgenommen und festgehalten bzw. eingeklemmt. Die Form und Ausdehnung der Klemmverbindung 11 bestimmt dabei im Wesentlichen den Abstand zwischen den beiden Fahrdrähten 2', ist darüber hinaus aber nicht beschränkt. Weitere beispielhafte Ausführungsformen der Klemmverbindung 11 werden in den weiteren Figuren dargestellt.

In den weiteren Figuren 3 bis 7 wurden aus Übersichtlichkeitsgründen nur noch die Teile der Figuren bezeichnet, die Änderungen der jeweiligen Ausführungsform zeigen, bzw. in direktem Zusammenhang mit diesen Änderungen stehen. Dabei sollen die, in den Figuren nicht bezeichneten Teile dieselben Bezugszeichen haben, wie die entsprechend bezeichneten Teile in der Fig. 2. Nicht veränderte Teile haben in der Regel auch jeweils dieselben Bezugszeichen.

Fig. 3 zeigt ein zweites Ausführungsbeispiel für eine erfindungsgemäße Stromschiene 1", insbesondere Deckenstromschiene, mit einem Steg 8', wobei der Steg 8' analog zur Fig. 2 auf der einen Seite in einer, in gleicher Weise ausgeführten Klemmvorrichtung 11 endet, und somit die Fahrdrähte 2' in analoger Weise aufnimmt, bzw. einklemmt. Im Unterschied zur Ausführungsform in der Fig. 2 geht der Steg 8' auf der anderen Seite vor dem Querträger 6' in zwei Verbindungen 9 über, bzw. teilt sich in zwei Verbindungen 9, die mit jeweils einem der Spannarme 4' verbunden sind und wobei wenigstens Teile der Verbindungen 9, wenigstens Teile der Spannarme 4' und wenigstens Teile des Querträgers 6' eine Aussparung 10 umschließen, wodurch die Ausführung der Stromschiene 1" an Stabilität zunimmt, insbesondere durch eine geringere Entfernung von der Klemmverbindung 11 zu den Verbindungen 9 im Gegensatz zur Entfernung zum Querträger 6' sowie durch die Aussparung 10. Die Aussparung 10 kann dabei ohne Beschränkung jegliche denkbare geometrische Form aufweisen, bzw. annehmen. Besonders vorteilhaft, sind dabei Vieleck-Formen, wie z.B. die in der Fig. 3 dargestellte Acht-Eck-Form.

Fig. 4 und Fig. 5 zeigen im Wesentlichen unveränderte Ausführungsformen der Stromschiene 1", insbesondere Deckenstromschiene, aus der Fig. 3, mit Ausnahme der Klemmverbindungen 11', 11" in jeweils leicht abgewandelter Form. So sind die in Fig. 4 und 5 dargestellten Klemmverbindung 11', 11" zweiarmig ausgebildet, wobei die beiden Arme der Klemmverbindung 11' in Fig. 4 jeweils zumindest teilweise zueinander parallele Ober- und Unterseiten aufweisen. Die in Fig. 5 dargestellte Klemmverbindung 11" weist dagegen zwei Arme auf, die auf der, bezüglich des Querträgers 6' abgewandten Seite einen stumpfen Winkel einschließen. Geht der stumpfe Winkel in einen gestreckten Winkel, also 180°, über, geht die Klemmverbindung 11" automatisch in die Klemmverbindung 11 aus den Figuren 2 und 3 über.

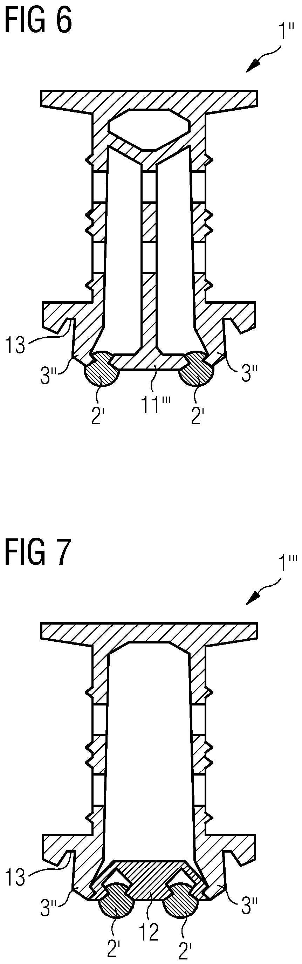

Fig. 6 zeigt eine weitere Ausführungsform einer Klemmverbindung 11''', die analog zur Klemmverbindung 11" aus der Figur 4 ausgeführt ist, mit dem Unterschied, dass die beiden Arme verlängert sind und somit ein größerer Abstand zwischen den beiden Fahrdrähten 2' realisiert werden kann. Dadurch ist aber auch eine konstruktive Anpassung der Klemmarme 3 " der Stromschiene 1" notwendig, um die beiden Fahrdrähte 2' entsprechend aufnehmen, bzw. einklemmen zu können. Hierzu müssen die beiden Klemmarme 3 " insbesondere am Klemmarmende entsprechend zurückgesetzt werden. Dagegen bleibt der obere Teil der Klemmarme 3", insbesondere die Ausdehnung und Form der Aussparung 13, unverändert.

Somit ist die Form der Klemmverbindung 11, 11', 11", 11''' die in den Figuren in beispielhaften Ausführungsformen gezeigt wurde, je nach Einsatzzweck entsprechend flexibel und ohne Beschränkung anpassbar.

Die unterschiedlichen Ausführungsformen der Klemmverbindung 11, 11', 11", 11''' können darüber hinaus ohne Einschränkung auch mit der alternativen Ausführungsform der Stromschiene 1' aus der Fig. 2 kombiniert werden.

Für alle Ausführungsformen ist es besonders vorteilhaft, wenn der Steg 8, 8' und/oder die Verbindungen 9 im Wesentlichen dieselbe Materialstärke wie einer der Spannarme 4' aufweisen, da dies entsprechende Vorteile hinsichtlich der Herstellung und der Stabilität der Stromschiene 1', 1", insbesondere Deckenstromschiene hat.

Fig. 7 zeigt ein drittes Ausführungsbeispiel für eine erfindungsgemäße Stromschiene 1''', insbesondere Deckenstromschiene, mit einer erfindungsgemäßen Klemmverbindung 12, aber ohne Steg. Die hier gezeigte Klemmverbindung 12 ist ein separates Bauteil, welches zwei Aussparungen aufweist, mit denen jeweils ein Fahrdraht 2' aufnehmbar ist. Dabei ist jeder der zwei Klemmarme 3 " direkt mit der Klemmverbindung 12 verbunden. Auf diese Weise kann die Grundform der Stromschiene 1''' im Vergleich zur Stromschiene 1 aus dem SdT konstruktiv im Wesentlichen gleich bleiben und es müssen, neben der separaten Fertigung der Klemmverbindung 12, die im Einsatzfall dann die beiden Fahrdrähte 2' aufnimmt, lediglich die beiden Klemmarme 3" der Stromschiene 1''' entsprechend angepasst, insbesondere am Klemmarmende zurückgesetzt werden, damit die beiden Klemmarme 3" über den jeweils unmittelbaren Kontakt zur Klemmverbindung 12 die beiden Fahrdrähte 2' entsprechend einklemmen können. Die Anpassung der Klemmarme 3" kann analog zu der, in der Fig. 6 beschriebenen Anpassung erfolgen. Der obere Teil der Klemmarme 3", insbesondere die Ausdehnung und Form der Aussparung 13, bleibt, ebenfalls wie in der Fig. 6 beschrieben, unverändert.

In allen in den Figuren 2 bis 7 gezeigten Ausführungsformen der erfindungsgemäßen Stromschiene 1', 1", 1''' befinden sich die zwei Fahrdrähte 2' bezüglich der Oberkante des Querträgers 6' auf der gleichen Höhe. Grundsätzlich ist eine unterschiedliche Höhe ggf. denkbar und möglich, jedoch ist außerhalb spezieller Einsatzzwecke die Ausführungsform mit gleicher Höhe der beiden Fahrdrähte 2' aus Gründen der Gleichgewichtslage sowie der Stabilität vorteilhafter und deshalb vorzuziehen.

## Patentansprüche

1. Stromschiene (1', 1", 1''') mit einem Querträger (6'), von dem zwei Spannarme (4') ausgehen, an die Klemmarme (3', 3") angeformt sind,
**dadurch gekennzeichnet, dass**
die Stromschiene (1', 1", 1''') eine Klemmverbindung (11, 11', 11", 11''', 12) aufweist, wobei mittels der Klemmverbindung (11, 11', 11", 11''', 12) und den Klemmarmen (3', 3") zwei Fahrdrähte (2') aufnehmbar sind, wobei sich die zwei Fahrdrähte (2') nicht gegenseitig berühren.

2. Stromschiene nach Anspruch 1,
**dadurch gekennzeichnet, dass**
die Klemmverbindung (12) zwei Aussparungen aufweist, mit denen jeweils ein Fahrdraht (2') aufnehmbar ist.

3. Stromschiene nach einem der Ansprüche 1 oder 2,
**dadurch gekennzeichnet, dass**
jeder Klemmarm (3") direkt mit der Klemmverbindung (12) verbunden ist.

4. Stromschiene nach Anspruch 1,
**dadurch gekennzeichnet, dass**
die Klemmverbindung (11, 11', 11", 11''') Teil eines Stegs (8, 8') ist und mittels des Stegs (8) mit dem Querträger (6') verbunden ist.

5. Stromschiene nach Anspruch 1,
**dadurch gekennzeichnet, dass**
die Klemmverbindung (11, 11', 11", 11''') Teil eines Stegs (8, 8') ist, wobei der Steg (8') mittels jeweils einer Verbindung (9) mit jeweils einem der Spannarme (4') verbunden ist und wobei wenigstens Teile der Verbindungen (9), wenigstens Teile der Spannarme (4') und wenigstens Teile des Querträgers (6') eine Aussparung (10) umschließen.

6. Stromschiene nach einem der Ansprüche 4 oder 5,
**dadurch gekennzeichnet, dass**
die Klemmverbindung (11, 11', 11", 11''') mit den zwei Fahrdrähten (2') jeweils auf den, von den Fahrdrähten (2') zueinander gewandten Seiten verbunden ist und wobei die jeweils gegenüberliegenden Seiten der zwei Fahrdrähte (2') mit jeweils einem Klemmarm (3', 3") verbunden sind.

7. Stromschiene nach Anspruch 6,
**dadurch gekennzeichnet, dass**
die Klemmverbindung (11, 11', 11", 11''') zweiarmig ausgebildet ist, wobei die zwei Arme auf der, bezüglich des Querträgers (6') abgewandten Seite einen stumpfen Winkel einschließen, oder einen gestreckten Winkel bilden.

8. Stromschiene nach einem der Ansprüche 4 bis 7,
**dadurch gekennzeichnet, dass**
der Steg (8, 8') und/oder die Verbindung (9) im Wesentlichen dieselbe Materialstärke wie ein Spannarm (4') aufweist.

9. Stromschiene nach einem der vorherigen Ansprüche,
**dadurch gekennzeichnet, dass**
sich die zwei Fahrdrähte (2') bezüglich der Oberkante des Querträgers (6') auf der gleichen Höhe befinden.
